# EUROPÄISCHE PATENTANMELDUNG

(11) **EP 2 133 678 A2**
(43) Veröffentlichungstag der Anmeldung: **16.12.2009**
(21) Anmeldenummer: 09157568.8
(22) Anmeldetag: 08.04.2009
(51) Int. Cl.: G01L 23/10, G01L 23/22, G01L 27/00

(54) **Kalibrierung der Piezoparameter für eine Zylinderinnendruckmessung mittels Piezoinjektoren**

(30) Priorität: 10.06.2008 DE 102008027585
(71) Anmelder: Siemens Aktiengesellschaft, 80333 München (DE)
(72) Erfinder: Bachmaier, Georg, 80538, München (DE); Bergmann, Dominik, 83679, Sachsenkam (DE); Gerlich, Matthias, 80333, München (DE); Tump, Christian, 80469, München (DE)

(57) **Zusammenfassung**

Die vorliegende Erfindung betrifft ein Verfahren zur Bestimmung eines Zylinderinnendrucks mittels eines Piezoinjektors für Kraftstoff-Direkteinspritzung. Es erfolgt ein Berechnen des Zylinderinnendrucks mittels einer erfassten, am Piezoinjektor anliegenden Messspannung und Verwenden eines Modellparameters aufweisenden Modells. Die Modellparameter müssen an die realen Bedingungen des Piezoinjektors angepasst werden. Piezoinjektoreigenschaften ändern sich infolge beispielsweise von Temperaturänderung, Alterung oder Exemplarstreuung. Es werden aktuelle Modellparameter mittels zusätzlicher Informationen von dem Piezoinjektor berechnet. Als zusätzliche Informationsquelle zur Adaption der Parameter zur Laufzeit eignen sich insbesondere Informationen, die sich während des Einspritzpulses durch parallele Messung von Spannung und Strom ergeben.

## Beschreibung

Die vorliegende Erfindung betrifft ein Verfahren gemäß dem Oberbegriff des Hauptanspruchs eine Vorrichtung gemäß dem Oberbegriff des Nebenanspruchs.

Die DE 10 2005 036 826 B4 offenbart einen Piezoinjektor für Kraftstoff-Direkteinspritzung. Ein derartiger Piezoinjektor vereinigt die Funktionen eines Injektors und einer Messvorrichtung des für die Beurteilung der Verbrennung relevanten Zylinderinnendrucks. Zur Auswertung des Spannungssignals am Piezoaktor wird eine Auswertevorrichtung verwendet, mit der das ermittelte Drucksignal von dem Ansteuersignal für den Aktor separiert und herausgefiltert werden kann. Es wird ein Steuergerät, das mit dem piezoelektrischen Aktor verbunden ist, während der Bestimmung des Drucksignals durch die Auswertevorrichtung von der piezoelektrischen Aktoreinheit getrennt oder hochohmig geschaltet. Auf diese Weise wird eine Verfälschung des Drucksignals vermieden.

Bei diesem Stand der Technik sind jedoch die hohe Temperaturabhängigkeit, die Exemplarstreuung und die Alterung der Eigenschaften des Piezoaktors nachteilig, der für diese Anwendung auf großem Hub und nicht auf erforderliche Eigenschaften als Sensor optimiert ist. Bei Versuchen hat sich ergeben, dass bereits bei einer Variation der Temperatur des Piezoaktors von 20° C auf 80° C und einer einfachen Auswertung der am Aktor auftretenden Spannung über einen konstanten Gain-Faktor, der Fehler des gemessenen Drucks bei Messwerten bis circa 100 bar bereits größer +/- 10 bar sein kann. Dies ist für eine reale Anwendung deutlich zu ungenau, sodass weitere Maßnahmen zur Online-Kalibrierung des Messsystems erforderlich sind.

Für das Problem eines großen Messfehlers sind keine herkömmlichen Lösungen bekannt.

Ein Piezoaktor zusammen mit einem Injektor kann durch ein Modell mit überschaubarer Komplexität hinreichend genau beschrieben werden. Sind die Modellparameter bekannt, kann anhand der real gemessenen Spannung am Piezo, die als Eingang für das Modell dient, der Druck im Zylinder berechnet werden. Nachteiligerweise ändern jedoch insbesondere Temperatur und Alterung das Streckenverhalten während der Laufzeit.

Es ist damit Aufgabe der vorliegenden Erfindung ein Verfahren und eine Vorrichtung zur Bestimmung eines Zylinderinnendrucks mittels eines Piezoinjektors für Kraftstoff-Direkteinspritzung unter Verwendung eines Modells derart bereit zu stellen, dass die Modellparameter immer an die realen Piezoinjektorparameter angepasst sind. Auf diese Weise sollen die Piezoinjektorparameter ändernden Einflüsse, wie es beispielsweise Temperatur, Exemplarstreuung oder Alterung sind, berücksichtigt werden.

Die Aufgabe wird durch ein Verfahren gemäß dem Hauptanspruch und eine Vorrichtung gemäß dem Nebenanspruch gelöst.

Zur Adaption der Parameter des Modells werden weitere Informationen über den Systemzustand berücksichtigt. Für die Zylinderinnendruckmessung wird lediglich die am Piezoinjektor anliegende Messspannung verwendet, da die auftretenden Ströme im Sensorbetrieb viel zu gering währen, um sie in der Anwendung, beispielsweise in einem Kraftfahrzeug, genau genug messen zu können. Die auftretenden Ströme im Sensorbetrieb weisen eine Größenordnung von einigen Mikroampere auf, wobei über den gleichen Zweig während einer Einspritzung 10 bis 20 Ampere fließen können. Zur Zylinderinnendruckmessung kann lediglich die Spannung gemessen werden, die Ströme sind hier zu klein. Die vorliegende Erfindung berücksichtigt, dass die Parameter des Simulationsmodells zur Berechnung des Zylinderinnendrucks aus der am Piezo auftretenden Spannung sich zur Laufzeit durch äußere Einflüsse, wie es beispielsweise Temperatur- und Alterungseinflüsse sind, stark ändern können. Als zusätzliche Informationsquelle zur Adaption der Parameter zur Laufzeit werden zusätzliche Informationen verwendet.

Weitere vorteilhafte Ausgestaltungen werden in Verbindung mit den Unteransprüchen beansprucht.

Gemäß einer vorteilhaften Ausgestaltung sind die zusätzlichen Informationen Messspannung und Messstrom am Piezoinjektor. Für die Einspritzung selbst kann dabei zusätzlich zur Spannung der Strom verwendet werden, um zumindest einen, eventuell sogar mehrere Parameter des Modells unter Ausnutzung des zeitlichen Verlaufs der beiden Signale nachzuführen. Als zusätzliche Informationsquellen zur Adaption der Parameter zur Laufzeit werden die Informationen verwendet, die durch Messung von Spannung und Strom ermittelt werden können.

Gemäß einer weiteren vorteilhaften Ausgestaltung erfolgt ein zeitlich paralleles Erfassen von Messspannung und Messstrom. Als zusätzliche Informationsquelle zur Adaption der Parameter zur Laufzeit werden die Informationen verwendet, die durch parallele Messung von Spannung und Strom ermittelt werden können.

Gemäß einer weiteren vorteilhaften Ausgestaltung erfolgt ein zeitlich paralleles Erfassen während mindestens eines Einspritzpulses. Als zusätzliche Informationsquelle zur Adaption der Parameter zur Laufzeit werden die Informationen verwendet, die während des Einspritzpulses durch parallele Messung von Spannung und Strom ermittelt werden können. Die aktuellen Parameter für das Simulationsmodul werden während des Einspritzpulses berechnet. In Zukunft kann dies allein schon für die Einspritzmengenregelung erforderlich sein. Die gleichen Parameter können nun auch für die Zylinderdruckmessung verwendet werden und so insbesondere die Temperatur- und Alterungseinflüsse zur Laufzeit kompensiert werden.

Gemäß einer weiteren vorteilhaften Ausgestaltung ist die Messspannung als Eingang für das Modell vorgesehen.

Gemäß einer weiteren vorteilhaften Ausgestaltung ist das Modell ein Simulationsmodell.

Gemäß einer weiteren vorteilhaften Ausgestaltung erfolgt das Berechnen von aktuellen Modellparametern mit den Schritten: Bereitstellen einer dem Piezoaktor aufweisenden realen Strecke mit den zusätzlichen Informationen als Eingangsgrößen und einer realen Ausgangsgröße; Bereitstellen des die reale Strecke abbildenden Modells mit den Eingangsgrößen und einer simulierten Ausgangsgröße; Ermitteln einer Größe Q als Summe der Differenzbeträge zwischen der realen und der simulierten Ausgangsgröße zu einzelnen Messzeitpunkten ti; Mittels mathematischer Optimierungsalgorythmen erfolgendes Variieren mittels eines globalen Minimums der Größe Q erfolgendes Berechnen der aktuellen Modellparameter.

Gemäß einer weiteren vorteilhaften Ausgestaltung erfolgt ein Verwenden des berechneten Zylinderinnendrucks zur Steuerung von Motorparametern, insbesondere zur Reduzierung von Verbrauch und/oder von Abgas und Geräuschemissionen.

Die vorliegende Erfindung wird anhand von Ausführungsbeispielen in Verbindung mit den Figuren näher beschrieben. Es zeigen:
- Fig. 1: ein Ausführungsbeispiel der Ermittlung des Zylinderinnendrucks;
- Fig. 2: ein Ausführungsbeispiel des Berechnens von aktuellen Modellparametern.

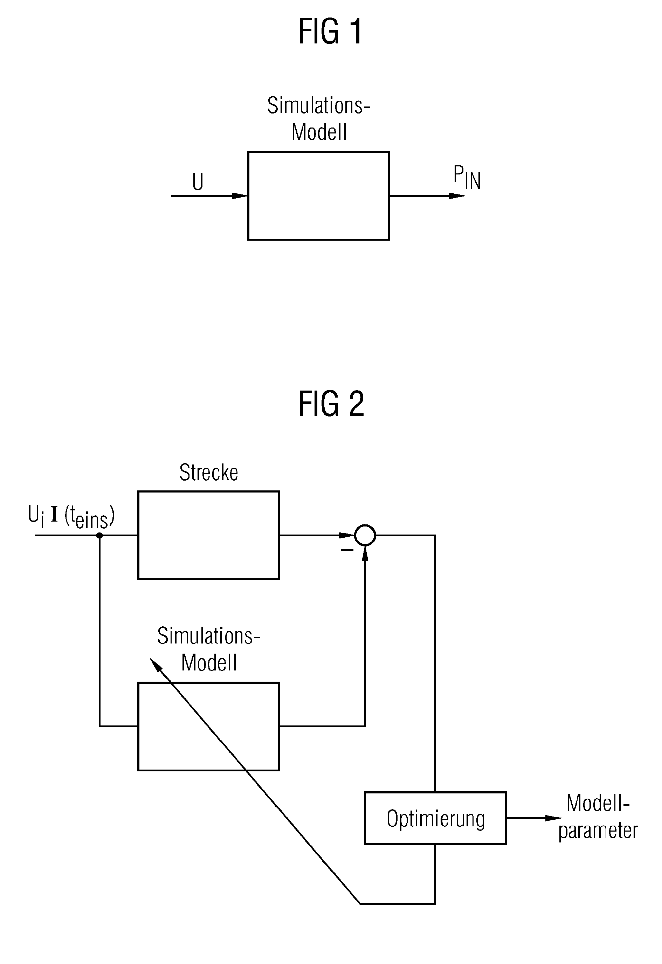

Figur 1 zeigt ein Ausführungsbeispiel zur Bestimmung eines Zylinderinnendrucks. Die Bestimmung eines Zylinderinnendrucks erfolgt mittels eines Piezoinjektors für Kraftstoff-Direkteinspritzung mittels Berechnen des Zylinderinnendrucks mittels einer erfassten am Piezoinjektor anliegenden Messspannung U und Verwenden eines Modellparameter aufweisenden Modells, insbesondere Simulationsmodells. Der Zylinderinnendruck ist mit P_{IN} dargestellt. Das Modell ist insbesondere ein lineares physikalisches Modell. Dabei sind Piezoaktormasse und Piezoaktorsteifigkeiten Konstanten. Andere Piezoparameter, wie es beispielsweise Querempfindlichkeiten sind, sind variabel, und weisen beispielsweise Hystereseeigenschaften auf.

Figur 2 zeigt ein Ausführungsbeispiel des Berechnens von aktuellen Modellparametern mittels zusätzlicher Informationen von den Piezoinjektor. Dabei sind die zusätzlichen Informationen die Messspannung und der Messstrom am Piezoinjektor. Es erfolgt ein zeitlich paralleles Erfassen von Messspannung und Messstrom. Messspannung und Messstrom werden zeitlich parallel während mindesten einen Einspritzpulses erfasst. Ein Berechnen der aktuellen Modellparameter wird mit folgenden Schritten ausgeführt: Bereitstellen einer den Piezoaktor aufweisenden realen Strecke mit den zusätzlichen Informationen als Eingansgrößen und der realen Ausgangsgröße. Die zusätzlichen Informationen sind die zeitlich parallel erfassten, während mindestens eines Einspritzpulses erfassten Messspannung U (t_{Einspritz}) und Messstrom I (t_{Einspritz}) am Piezoinjektor; Bereitstellen des die reale Strecke abbildenden Modells mit den Eingangsgrößen und einer simulierten Ausgangsgröße; Ermitteln einer Größe Q als Summe der Differenzbeträge zwischen der realen und der simulierten Ausgangsgröße zu den einzelnen Messzeitpunkten t_{Einspritz}; Mittels mathematischer Optimierungsalgorythmen erfolgendes Variieren mittels eines globalen Minimums der Größe Q erfolgenden Berechnen der aktuellen Modellparameter.

## Patentansprüche

1. Verfahren zur Bestimmung eines Zylinderinnendrucks mittels eines Piezoinjektors für Kraftstoff-Direkteinspritzung mit dem Schritt
Berechnen des Zylinderinnendrucks mittels einer erfassten am Piezoinjektor anliegenden Messspannung und Verwenden eines Modellparameter aufweisenden Modells, **gekennzeichnet durch** Berechnen von aktuellen Modellparametern mittels zusätzlicher Informationen von dem Piezoinjektor.

2. Verfahren nach Anspruch 1,
**dadurch gekennzeichnet, dass**
die zusätzlichen Informationen Messspannung und Messstrom am Piezoinjektor sind.

3. Verfahren nach Anspruch 2,
**gekennzeichnet durch**
zeitlich paralleles Erfassen von Messspannung und Messstrom.

4. Verfahren nach Anspruch 3,
**gekennzeichnet durch**
zeitlich paralleles Erfassen während mindestens eines Einspritzpulses.

5. Verfahren nach einem der vorangehenden Ansprüche,
**dadurch gekennzeichnet, dass**
die Messspannung als Eingang für das Modell vorgesehen ist.

6. Verfahren nach einem der vorangehenden Ansprüche,
**dadurch gekennzeichnet, dass**
das Modell ein Simulationsmodell ist.

7. Verfahren nach einem der vorangehenden Ansprüche,
**dadurch gekennzeichnet, dass**
Berechnen von aktuellen Modellparametern mit folgenden Schritten ausgeführt wird:
Bereitstellen einer den Piezoaktor aufweisenden realen Strecke mit den zusätzlichen Informationen als Eingangsgrößen und einer realen Ausgangsgröße;
Bereitstellen des die reale Strecke abbildenden Modells mit den Eingangsgrößen und einer simulierten Ausgangsgröße; Ermitteln einer Größe Q als Summe der Differenzbeträge zwischen der realen und der simulierten Ausgangsgröße zu einzelnen Messzeitpunkten tᵢ;
mittels mathematischer Optimierungsalgorithmen erfolgendes Variieren und mittels eines globalen Minimums der Größe Q erfolgendes Berechnen der aktuellen Modellparameter.

8. Verfahren nach einem der vorangehenden Ansprüche,
**gekennzeichnet durch**
Verwenden des berechneten Zylinderinnendrucks zur Steuerung von Motorparametern, insbesondere zur Reduzierung von Verbrauch und/oder von Abgas- und Geräuschemissionen.

9. Vorrichtung zur nach einem der vorangehenden Ansprüche erfolgenden Bestimmung eines Zylinderinnendrucks mittels eines Piezoinjektors für Kraftstoff-Direkteinspritzung **gekennzeichnet durch**
eine Einrichtung zur Berechnung des Zylinderinnendrucks mittels der erfassten Messspannung und Verwenden des Modells und eine Einrichtung zur Messung mindestens einer Messgröße.
